# EUROPEAN PATENT APPLICATION

(11) **EP 2 881 165 A1**
(43) Date of publication of application: **10.06.2015**
(21) Application number: 13825126.9
(22) Date of filing: 01.07.2013
(51) Int. Cl.: B01F 1/00, B01D 19/00, B01F 3/04, B01F 5/00, B01F 5/02, B01F 15/02

(54) **GAS-DISSOLVING DEVICE**

(30) Priority: 31.07.2012 JP 2012169816
(71) Applicant: Panasonic Intellectual Property Management Co., Ltd., Osaka-shi, Osaka 540-6207 (JP)
(72) Inventor: MAEDA, Yasunari, Osaka-shi, OSAKA 540-6207 (JP); ITOU, Yoshihiro, Osaka-shi, OSAKA 540-6207 (JP); KITAMURA, Hitoshi, Osaka-shi, OSAKA 540-6207 (JP); TSUTSUMI, Kyoko, Osaka-shi, OSAKA 540-6207 (JP); SHIBATA, Naoki, Osaka-shi, OSAKA 540-6207 (JP); AKITA, Tomohiro, Osaka-shi, OSAKA 540-6207 (JP)
(74) Representative: Müller-Boré & Partner Patentanwälte PartG mbB
(86) International application number: PCT/JP2013/004071
(87) International publication number: WO 2014/020824

(57) **Abstract**

A gas-dissolving device is provided with a gas discharge valve which has a gas inlet in a bottom portion of the gas discharge valve and is provided at a top portion of a gas-liquid separation vessel, vent ports which are formed in the gas inlet and introduce a part of gasses accumulated in the top portion of the gas-liquid separation vessel into an interior of the gas discharge valve, and a wall portion which is formed at an outside of the vent ports and suppresses a liquid flow into an interior of the gas inlet.

## Description

### Technical Field

The present invention relates to a gas-dissolving device which dissolves a gas such as air in a solvent such as water.

### Background Art

The applicant has proposed a gas-dissolving device which can be reduced in size, suppress turbulence in a gas-liquid separation vessel, and suppress an outflow of large bubbles in JP 2010-227784 A.

The gas dissolving device disclosed in JP 2010-227784 A includes a dissolution tank of which an interior is in turn partitioned into a gas-liquid mixing vessel, a large-bubble outflow preventing vessel, and a gas-liquid separation vessel from an upstream side to a downstream side with respect to a flowing of a liquid by two partitioning walls consisting of a first partitioning wall and a second partitioning wall. In the gas dissolving-device, the fluid flowing into the dissolution tank is mixed with a gas in the gas-liquid mixing vessel to produce a gas-dissolved liquid, and the liquid flows in turn into the large-bubble outflow preventing vessel and the gas-liquid separation vessel.

In the gas-dissolving device, the dissolution tank is provided with a gas discharge valve in a portion corresponding to an upper end of the gas-liquid separation vessel, so that a part of the undissolved gas which is left undissolved in the fluid and retained in the top portion of the dissolution tank can be extracted to an outside of the dissolution tank. An air exchange is promoted by supplying water and air to the gas-liquid mixing vessel and exhausting the undissolved gas from the gas discharge valve. According to the air exchange, oxygen concentration in the dissolution tank can be maintained at a high level and resulting in dissolving a larger amount of oxygen in the water. The active exhaust of the undissolved gas can dissolve a larger amount of oxygen in the water due to, for example, a saturated state of dissolved-oxygen concentration in the water and a high pressure in the dissolution tank. It is possible to produce an oxygen-dissolved water having a sufficiently high concentration of the dissolved oxygen corresponding to required effects.

### Summary of Invention

### Technical Problems

However, the liquid flowing from the large-bubble outflow preventing vessel to the gas-liquid separation vessel positions at the lower side of the gas discharge valve according to the flowing of the liquid and therefore an opening for introducing the gas is frequently clogged. In such a case, the undissolved gas retained in the top portion and near the top portion of the dissolution tank is hard to move toward the gas discharge valve. Besides, when the undissolved gas is mixed in the liquid, the bubbles by the undissolved gas only come to the surface of the liquid and it is difficult to exhaust the undissolved gas from the gas discharge valve.

The invention has been made in view of the above circumstances and has an object to provide a gas-dissolving device which can smoothly exhaust a part of an undissolved gas accumulated in a top portion and near the top portion of the dissolution tank to an outside of the dissolution tank by a gas discharge valve.

### Means for Solving Problems

In order to solve the above problems, the first aspect of the invention provides a gas-dissolving device of the invention comprises a dissolution tank provided with an outlet capable of flowing a liquid in which gasses are dissolved, and a first partitioning wall and a second partitioning wall provided in an interior of the dissolution tank, wherein the interior of the dissolution tank is partitioned in turn into a gas-liquid mixing vessel, an intermediate vessel, and a gas-liquid separation vessel from an upstream side to a downstream side with respect to a flow of the liquid by the first partitioning wall and the second partitioning wall, wherein a fluid flowing into the dissolution tank is mixed with gasses in the gas-liquid mixing vessel to produce the liquid in which the gasses are dissolved, and wherein the liquid sequentially flows into the intermediate vessel and the gas-liquid separation vessel, and flows from the outlet of the dissolution tank to an outside of the dissolution tank

The gas-dissolving device of the first aspect further comprises a gas discharge valve which has a gas inlet in a bottom portion and is provided in the top portion of the gas-liquid separation vessel, vent ports which are formed at the gas inlet and introduce a part of the gasses accumulated in the top portion of the gas-liquid separation vessel into an interior of the gas discharge valve, and a wall portion which is formed at an outside of the vent ports and suppresses a liquid flow into an interior of the gas inlet.

The second aspect of the invention is that it is preferable that the wall portion is provided to surround the vent ports from an outside of the vent ports.

The third aspect of the invention is that it is preferable that the vent ports are formed to introduce the gasses into the gas inlet from a side of the gas inlet.

The fourth aspect of the invention is that it is preferable that the second partitioning wall and the outlet are provided such that the liquid flows in a horizontal direction in the gas-liquid separation vessel.

### Effects of Invention

According to a gas-dissolving device of the invention, a part of undissolved gasses accumulated in a top portion and near the top portion of a dissolution tank can be smoothly exhausted to an outside of the dissolution tank by a gas discharge valve.

### Brief Description of Drawings

Fig. 1 is a front view illustrating one of the embodiments of a gas-dissolving device of the invention.
Fig. 2 is a vertical cross-sectional view of the gas-dissolving device illustrated in Fig. 1.
Figs. 3(a), 3(b), and 3(c) are cross-sectional views taken along lines ofA-A, B-B, and C-C, respectively, of a dissolution tank in the gas-dissolving device illustrated in Fig. 2.
Fig. 4 is a partially broken perspective view of the dissolution tank of the gas-dissolving device illustrated in Fig. 2.
Fig. 5 is a schematic diagram illustrating suppression of bubbles movement by vertical ribs.
Fig. 6 is a partially broken perspective view illustrating a peripheral portion of a gas circulation pipe provided with the dissolution tank
Fig. 7 is an exploded perspective view of the dissolution tank of the gas-dissolving device illustrated in Fig. 1.
Fig. 8 is an exploded perspective view of the dissolution tank of the gas-dissolving device illustrated in Fig. 1.
Fig. 9 is a perspective view illustrating an upper part of the gas dissolution tank illustrated in Figs. 7 and 8 when viewed from a rear side.
Fig. 10 is a cross-sectional view taken along la line D-D of the dissolution tank of the gas-dissolving device illustrated in Fig. 2

### Embodiments

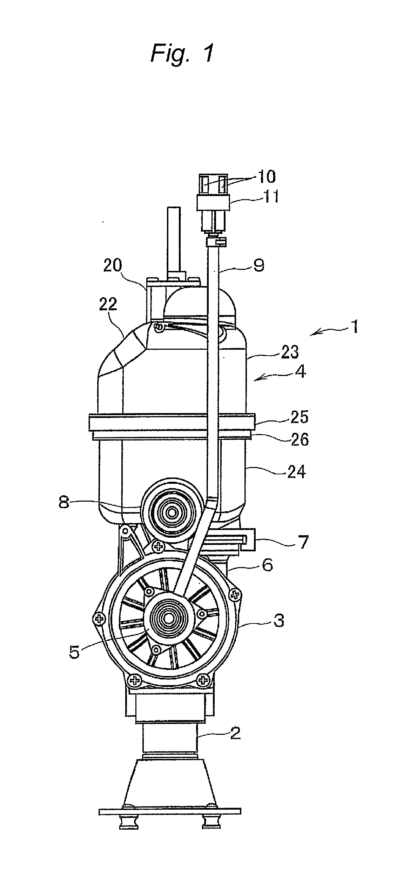

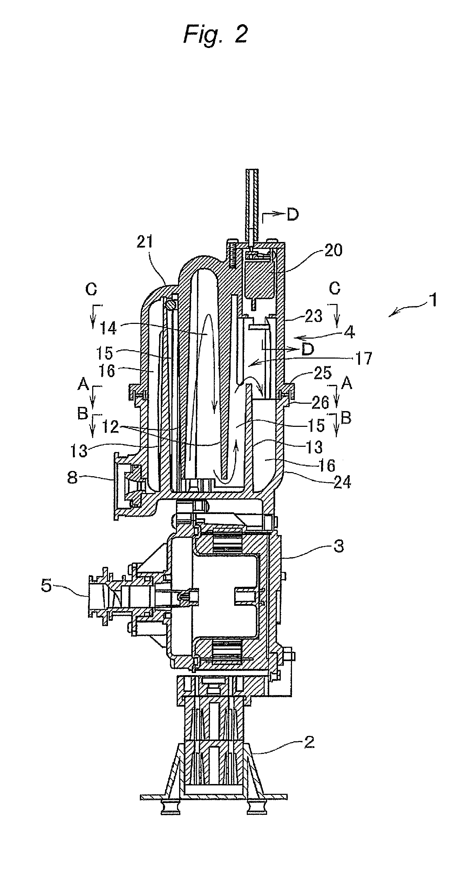

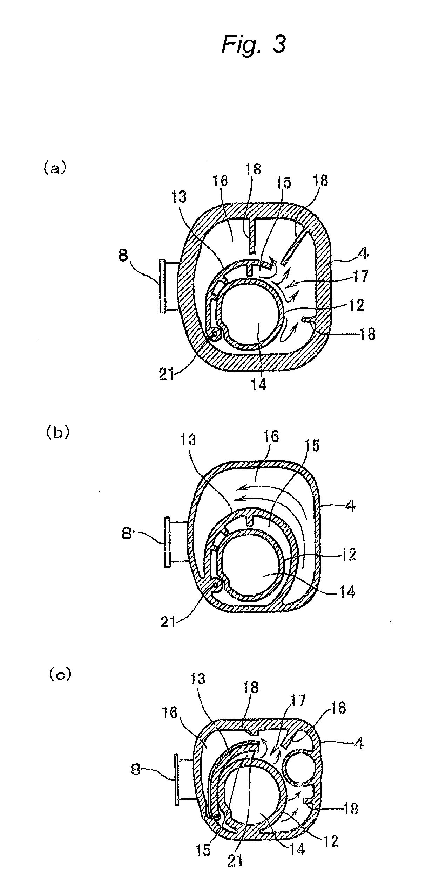

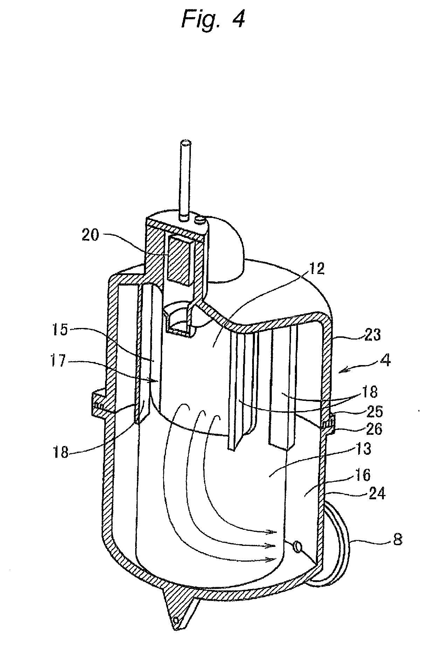

Fig. 1 is a front view illustrating one of the embodiments of a gas-dissolving device of the invention. Fig. 2 is a vertical cross-sectional view of the gas-dissolving device illustrated in Fig. 1. Figs. 3(a), 3(b), and 3(c) are cross-sectional views taken along lines ofA-A, B-B, and C-C, respectively, of a dissolution tank in the gas-dissolving device illustrated in Fig. 2. Fig. 4 is a partially broken perspective view of the dissolution tank of the gas-dissolving device illustrated in Fig. 2.

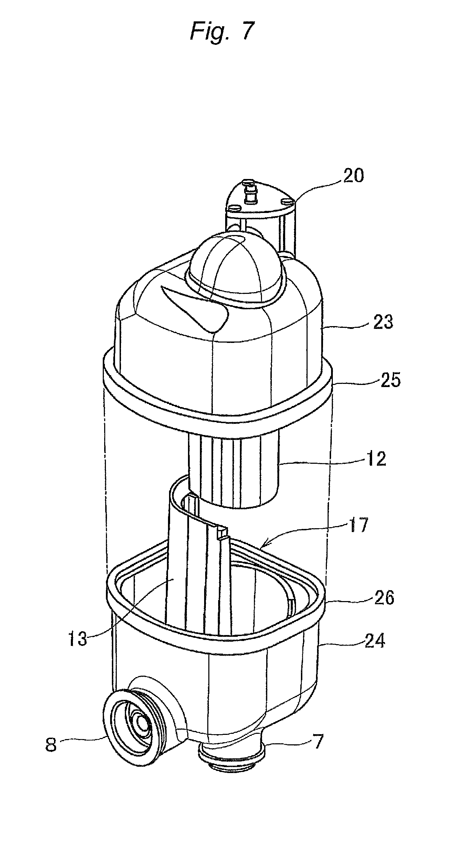

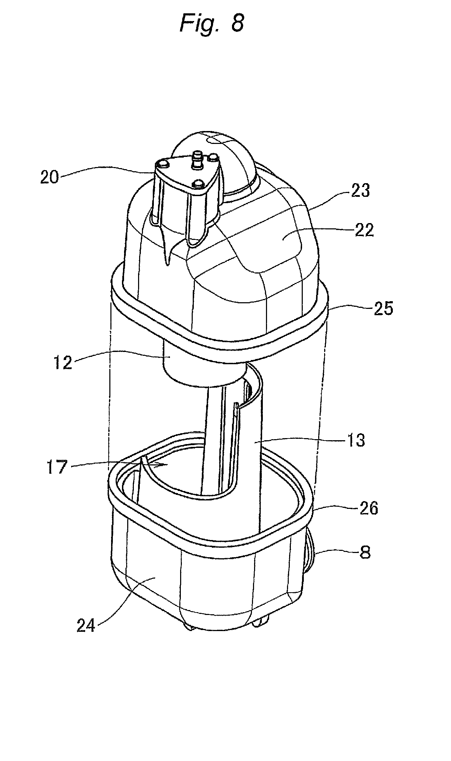

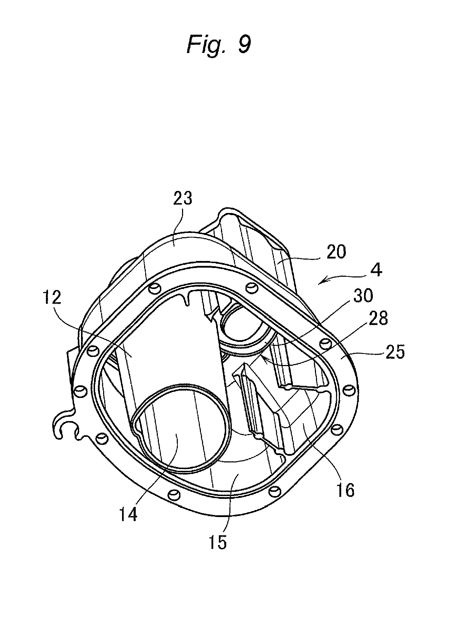

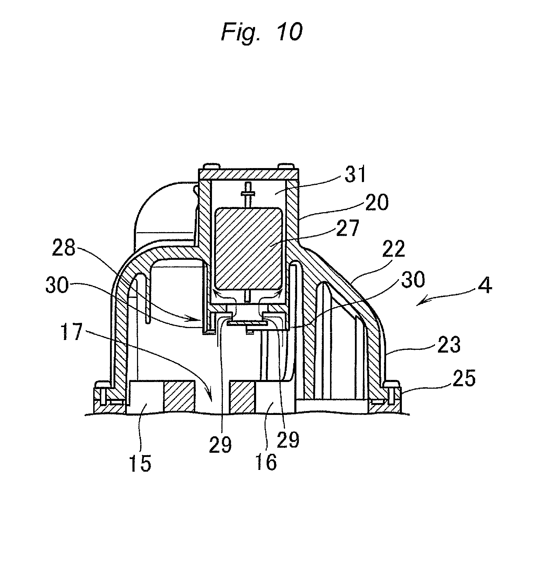

Fig. 7 is an exploded perspective view of the dissolution tank of the gas-dissolving device illustrated in Fig. 1. Fig. 8 is an exploded perspective view of the dissolution tank of the gas-dissolving device illustrated in Fig. 1. Fig. 9 is a perspective view illustrating an upper part of the gas dissolution tank illustrated in Figs. 7 and 8 when viewed from a rear side. Fig. 10 is a cross-sectional view taken along la line D-D of the dissolution tank of the gas-dissolving device illustrated in Fig. 2

As illustrated in Figs. 1 and 2, a gas-dissolving device 1 has a dissolution tank 4 which is provided with an outlet 8 capable of draining a liquid in which gasses are dissolved, and a first partitioning wall 12 and a second partitioning wall 13 which are provided in an interior of the dissolution tank 4. The interior of the dissolution tank 4 is in turn partitioned into a gas-liquid mixing vessel 14, an intermediate vessel 15, and a gas-liquid separation vessel 16 from an upstream side to a downstream side with respect to a flow of the liquid by the first partitioning wall 12 and the second partitioning wall 13. In the gas dissolving device 1, a fluid flowing into the dissolution tank 4 is mixed with gasses in the gas-liquid mixing vessel 14 to produce the liquid. The liquid sequentially flows into the intermediate vessel 15 and the gas-liquid separation vessel 16, and flows from the outlet 8 of the dissolution tank 4 to an outside of the dissolution tank 4.

As illustrated in Figs. 9 and 10, the gas-dissolving device 1 also has a gas discharge valve 20 which is provided at a top portion of the gas-liquid separation vessel 16 and has a gas inlet 28 in a bottom portion of the gas discharge valve 20, vent ports 29, and a wall portion 30. The vent ports 29 are formed in the gas inlet 28 and introduce a part of the gasses accumulated in the top portion of the gas-liquid separation vessel 16 into an interior of the gas discharge valve 20. The wall portion 30 is formed at an outside of the vent ports 29 and suppresses a flow of the liquid into an interior of the gas inlet 28.

In the gas-dissolving device 1 above-mentioned, in details, as illustrated in Figs. 1 and 2, a pump 3 is fixed on a stand 2 and the dissolution tank 4 is vertically mounted on the pump 3. The pump 3 supplies a solvent such as water under pressure to the dissolution tank 4 and the pump 3 has a suction portion 5 for the solvent in a front face of the pump 3. The suction portion 5 is possible to connect with a suction pipe (not illustrated). The pump 3 is provided with an ejection portion 6 protruding upward in an upper end of the pump 3.

As illustrated in Fig. 1, the dissolution tank 4 is provided with an inflow portion 7 at a bottom portion and the inflow portion 7 is connected to the ejection portion 6 of the pump 3. Therefore, a solvent fed by the pump 3 flows from the bottom portion of the dissolution tank 4 into an inside of the dissolution tank 4. In addition, the dissolution tank 4 is provided with the outlet 8 in the bottom portion at a position different from that of the inflow portion 7. The outlet 8 is a portion through which the liquid produced in the dissolution tank 4 flows out of the dissolution tank 4 and is disposed at a front face of the dissolution tank 4. The outlet 8 is possible to connect with an outflow pipe (not illustrated) to supply the liquid to a supply destination.

Further, in the gas-dissolving device 1, a gas suction pipe 9 extending in a height direction of the gas-dissolving device 1 is connected to the suction portion 5 of the pump 3. A tip end of the gas suction pipe 9 is connected to a gas suction portion 11 which has a gas suction port 10. By a negative pressure generated by an operation of the pump 3, the gas as a solute, for example, air, which is a dissolution target of the dissolution tank 4, is sucked from the gas suction port 10 of the gas suction portion 11. The gas is fed into the suction portion 5 of the pump 3 through the gas suction pipe 9 and is mixed as bubbles in the solvent such as water, resulting in production of a gas-liquid mixing fluid. The gas-liquid mixing fluid is supplied as a fluid into the dissolution tank 4 through the ejection portion 6 and the inflow portion 7.

As illustrated in Fig. 2, two partitioning walls, i.e., the first partitioning wall 12 and the second partitioning wall 13 are provided in the interior of the dissolution tank 4. The interior of the dissolution tank 4 is partitioned into the gas-liquid mixing vessel 14, the intermediate vessel 15 and the gas-liquid separation vessel 16 by the first partitioning wall 12 and the second partitioning wall 13. The gas-liquid mixing vessel 14 is positioned at a most upstream side with respect to the flow of the liquid produces in the dissolution tank 4. The intermediate tank 15 is disposed adjacent to an outside of the gas-liquid mixing vessel 14. The gas-liquid separation vessel 16 is positioned at a most downstream side with respect to the flow of the liquid and is disposed adjacent to an outside of the intermediate vessel 15.

As illustrated in Figs. 3(a), 3(b), and 3(c), both the first partitioning wall 12 and the second partitioning wall 13 are formed in an elliptical shape. The first partitioning wall 12 serves as a partition between the gas-liquid mixing vessel 14 and the intermediate vessel 15 and as illustrated in Fig. 2, the first portioning wall 12 extends downward from an upper face of the dissolution tank 4. A lower end of the first partitioning wall 12 does not reach a bottom face of the dissolution tank 4 and forms a gap with the bottom face of the dissolution tank 4. The gap serves as a passage of the liquid to communicate with the gas-liquid mixing vessel 14 and the intermediate vessel 15.

The second partitioning wall 13 serves as a partition between the intermediate vessel 15 and the gas-liquid separation vessel 16 and extends upward from the bottom face of the dissolution tank 4. The second partitioning wall 13 is provided such that the intermediate vessel 15 surrounds the gas-liquid mixing vessel 14 from an outside of the gas-liquid mixing vessel 14. As illustrated in Figs. 3(a), 3(c), and 4, a top portion of the second partitioning wall 13 is partially cut in an elliptical shape in a cross-sectional view and a notch portion 17 is formed at the top portion of the second portioning wall 13. The intermediate vessel 15 and the gas-liquid separation vessel 16 communicate with each other through the notch portion 17. The notch portion 17 is disposed opposite to the outlet 8. The outlet 8 is positioned away from the notch portion 17. The outlet 8 is also provided in a bottom portion of the gas-liquid separation vessel 16 and communicates with the gas-liquid separation vessel 16.

As illustrated in Fig. 2, in the dissolution tank 4, when the gas-liquid mixing fluid is supplied to the interior of the dissolution tank 4 by the operation of the pump 3, the gas-liquid mixing fluid is ejected upward from the bottom portion of the dissolution tank 4 in the gas-liquid mixing vessel 14 through the inflow portion 7 illustrated in Fig. 1. The gas-liquid mixing fluid collides with the upper face of the dissolution tank 4 and the first partitioning wall 12, rebounds therefrom, and is accumulated in the bottom portion of the gas-liquid mixing tank 14. In addition, the gas-liquid mixing fluid which collides with and rebounds from the upper face of the dissolution tank 4 and the first partitioning wall 12 collides with the subsequent gas-liquid mixing fluid which is upwardly ejected from the bottom portion of the dissolution tank 4. The gas-liquid mixing fluid also collides with a surface of the gas-liquid mixing fluid accumulated in the gas-liquid mixing vessel 14 and as a result the gas-liquid mixing fluid is agitated. At a same time, gasses mixed in the gas-fluid mixing fluid through the gas suction pipe 9 illustrated in Fig. 1 and having been accumulated in the gas-liquid mixing vessel 14 before the supply of the gas-liquid mixing fluid are violently mixed with the solvent such as water. In addition, the gas-liquid mixing fluid is agitated. Thus, gasses are dissolved in the solvent under pressure and the liquid in which gasses are dissolved is produced. This is because the agitation causes the gasses mixed as bubbles in the gas-liquid mixing fluid to be sheared and finely divided, and because a surface in contact with the solvent increases. That is further because a gas concentration near the surface of the liquid is reduced by uniform concentration promoted by the agitation and because a dissolution rate of the gas in the solvent increases.

The produced liquid flows to the intermediate vessel 15 through the gap between the lower end of the first partitioning wall 12 and the bottom face of the dissolution tank 4. As illustrated in Figs. 3(a), 3(c), and 4, the liquid flowing to the intermediate vessel 15 flows over the notch portion 17 of the second partitioning wall 13 into the gas-liquid separation vessel 16. The gas-liquid separation vessel 16 separates the gas which is undissolved in the liquid from the liquid as bubbles. Since the flow of the liquid is raised up near the surface of the liquid which is a gas-liquid boundary, the bubbles move upward by a buoyant force. On the other hand, the liquid flowing into the gas-liquid separation vessel 16 flows in a direction not preventing the bubbles from ascending. As illustrated in Figs. 3(b) and 4, the liquid flows in a horizontal direction in the gas-liquid separation vessel 16. The horizontal flow of the liquid follows along an outer surface of the intermediate vessel 15 and the liquid flowing in the horizontal direction in the gas-liquid separation vessel 16 flows out to an outside of the dissolution tank 4 through the outlet 8. Since the outlet 8 is provided in the bottom portion of the gas-liquid separation vessel 16, an outflow of large bubbles near the surface of the liquid is suppressed.

As described above, in the dissolution tank 4, since the second partitioning wall 13 and the outlet 8 are provided so that the liquid in the gas-liquid separation vessel 16 can flow along the outer surface of the intermediate vessel 15 in the horizontal direction, the dissolution tank 4 can be made much smaller. In particular, a size in a vertical direction of the dissolution tank 4 can be smaller. The size of the dissolution tank 4 in the vertical direction can be effectively shortened. In addition, since the outlet 8 is provided away from the notch portion 17 of the intermediate vessel 15, a distance necessary for separating the gas from the liquid can be longer and a time taken for ascending the bubbles can be longer. By the horizontal flow of the liquid in the gas-liquid separation vessel 16 the undissolved gas can be separated from the liquid during flowing, resulting in effective separation of the gas from the liquid Therefore, it is possible to suppress the undissolved gas from flowing out to the outside of the dissolution tank 4 through the outlet 8.

Further, in the dissolution tank 4, since the intermediate vessel 15 is disposed to surround the gas-liquid mixing vessel 14 from the outside of the gas-liquid fixing vessel 14 by the second partitioning wall 13, it is possible to suppress noises which may be generated when producing the liquid. Furthermore, since the first partitioning wall 12 and the second partitioning wall 13 have the elliptical shape, the liquid flow is evenly made so that the dissolution tank 4 is also effectively miniaturized further more.

Besides, as illustrated in Figs. 3(a), 3(c), and 4, vertical ribs 18 extending downward from the upper surface of the gas-liquid separation vessel 16 are provided with the gas-liquid separation vessel 16. The vertical ribs 18 are formed in a small piece shape and three vertical ribs 18 are provided with an interval in a liquid-flow direction, respectively.

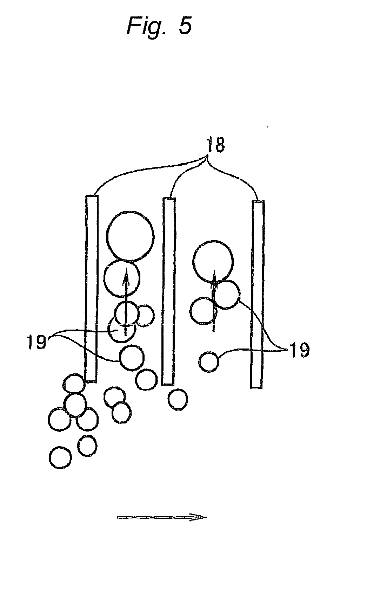

Fig. 5 is a schematic diagram illustrating suppression of bubbles movement by vertical ribs.

Bubbles 19 moving upward in the liquid in the gas-liquid separation vessel 16 are regulated by the vertical ribs 18 to move in the horizontal liquid-flow direction. The bubbles 19 only can ascend in the length direction of the vertical ribs 18 and a plurality of the ascending bubbles 19 are gradually combined. The vertical ribs 18 also serve to promote the combination of the bubbles 19. Therefore, the undissolved gas is efficiently separated from the liquid and large bubbles can be suppressed not to flow out to the outlet 8 from the gas-liquid separation vessel 16. The combined bubbles 19 are broken when reaching the liquid surface and the undissolved gasses are accumulated in the top portion of the gas-liquid separation vessel 16.

As illustrated in Figs. 2 and 4, the gas discharge valve 20 is provided in the top portion of the gas-liquid separation vessel 16 of the dissolution tank 4 in order to drain off the undissolved gasses accumulated in the top portion of the gas-liquid separation vessel 16 from the dissolution tank 4.

In addition, as illustrated in Figs. 2, 3(a), 3(b), and 3(c), a gas circulation pipe 21 is provided in order to reuse the gasses accumulated in the top portion of the gas-liquid separation vessel 16.

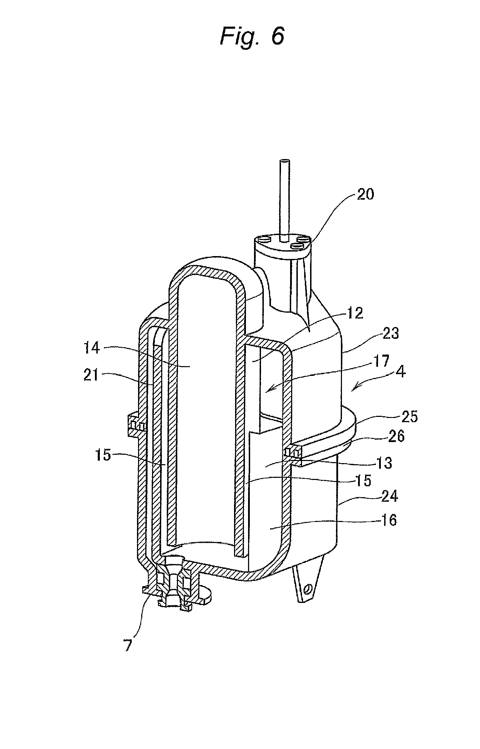

Fig. 6 is a partially broken perspective view illustrating a peripheral portion of a gas circulation pipe provided with the dissolution tank.

As illustrated in Fig. 6, the gas circulation pipe 21 is provided in an interior of the intermediate vessel 15 in the vertical direction and the lower end of the gas circulation pipe 21 is connected to the inflow portion 7 of the dissolution tank 4. As illustrated in Fig. 3(c), an upper end of the gas circulation pipe 21 is bent in an elliptical shape along the second partitioning wall 13 and is horizontally disposed. The gas circulation pipe 21 is made of an elastic material such as rubber. As illustrated in Fig. 2, the upper end of the gas circulation pipe 21 is disposed between the upper face of the dissolution tank 4 and the top portion of the second partitioning wall 13. Therefore, the upper end of the gas circulation pipe 21 also serves as a packing.

At the time of producing the liquid in which the gas is dissolved, there occurs a difference in pressure between a vicinity of the upper end and a vicinity of the lower end of the gas circulation pipe 21. The pressure in the vicinity of the upper end of the gas circulation pipe 21 is higher than that in the vicinity of the lower end. In addition, since a flow-speed of the gas-liquid mixing fluid is high in the inflow portion 7 illustrated in Fig. 6, the pressure in the inflow portion 7 is reduced. Therefore, the undissolved gasses accumulated in the top portion of the gas-liquid separation vessel 16 are absorbed from the upper end of the gas circulation pipe 21 and are supplied to the inflow portion 7 from the lower end of the gas circulation pipe 21. The gasses fed to the inflow portion 7 are mixed with the gas-liquid mixing fluid again and are dissolved in the solvent in the gas-liquid mixing vessel 14. In this way, since the dissolution tank 4 is provided with the gas circulation pipe 21 which supplies the gasses accumulated in the top portion of the gas-liquid separation vessel 16 to the gas-liquid mixing fluid flowing in the dissolution tank 4, the undissolved gasses are reusable, and gas-dissolution efficiency can be improved.

On the other hand, the gas circulation pipe 21 is not only provided in the interior of the intermediate vessel 15 but also provided in an interior of the gas-liquid separation vessel 16. Even if the gas circulation pipe 21 is provided in the interior of the gas-liquid separation vessel 16, the gas circulation pipe 21 can function in the same way as a case where the gas circulation pipe 21 is provided in the interior of the intermediate vessel 15.

As illustrated in Fig. 1, a slope portion 22 of a falling gradient is formed in the top portion of the dissolution tank 4. The slope portion 22 is able to collect the gasses accumulated in the top portion of the gas-liquid separation vessel toward a center portion of the dissolution tank 4. The absorption of the gas from the upper end of the gas circulation pipe 21 is smoothly performed and the gas can be efficiently supplied to the inflow portion 7.

As illustrated in Figs. 1 and 2, the dissolution tank 4 is divided into two portions in a center portion in a vertical direction of the dissolution tank 4 and is made of two parts that are an upper part 23 on the upper side of the dissolution tank 4 and a lower part 24 on the lower side of the dissolution tank 4.

Fig. 7 is an exploded perspective view of the dissolution tank of the gas-dissolving device illustrated in Fig. 1. Fig. 8 is an exploded perspective view of the dissolution tank of the gas-dissolving device illustrated in Fig. 1. In Figs. 7 and 8, the dissolution tank is illustrated in different directions.

As illustrated in Figs. 7 and 8, the upper part 23 is integrally formed with the first partitioning wall 12 and the first partitioning wall 12 extends downward from the upper face of the upper part 23. The lower part 24 is integrally formed with the second partitioning wall 13 and the second partitioning wall 13 extends upward from the bottom face of the lower part 24. In addition, the lower part 24 is integrally formed with the inflow portion 7 and the outlet 8. At the edge portion of the lower end of the upper part 23 and the edge portion of the upper end of the lower part 24, flange portions 25 and 26 are provided to extend toward out sides of the upper part 23 and lower part 24. The dissolution tank 4 is assembled by placing the flange portions 25 on the flange portion 26 and engaging the upper part 23 and the lower part 24 using appropriate fixing tools such as bolts and nuts at predetermined positions of the flange portions 25 and 26. At the time of assembling, the first partitioning wall 12 is inserted into an inside of the second partitioning wall 13 and thus the gas-liquid mixing vessel 14, the intermediate vessel 15, and the gas-liquid separation vessel 16 are formed. In addition, as illustrated in Fig. 2, the upper end of the gas circulation pipe 21 illustrated in Fig. 3(c) which is made of an elastic material is interposed between an upper face of the upper part 23 and the top portion of the second partitioning wall 13. By the insertion of the gas circulation pipe 21, the gas circulation pipe 21 serves as a packing and the upper face of the upper part 23 and the top portion of the second partitioning wall 13 become a watertight structure. The watertight structure can suppress an outflow of the liquid from the intermediate vessel 15 to the gas-liquid separation vessel 16 in a portion other than the notch portion 17 of the second partitioning wall 13. Since the watertight structure between the upper face of the upper part 23 and the top portion of the second partitioning wall 13 is realized by the gas circulation pipe 21 which supplies the gasses accumulated in the top portion of the gas-liquid separation vessel 16 to the dissolution tank 4, the number of components of the dissolution tank 4 is reduced.

Further, as illustrated in Figs. 9 and 10, in the gas-dissolving device 1, the gas discharge valve 20 provided at the top portion of the gas-liquid separation vessel 16 of the dissolution tank 4 has a float 27 which is movable in a vertical direction following rise and fall of a height of the surface of the liquid in the gas-liquid separation vessel 16. The float 27 moves up and down along changes in height of the liquid surface and the gas discharge valve 20 discharges or holds the gasses accumulated in the top portion of the gas-liquid separation vessel 16 according to the up-and-down movement of the float 27.

The gas discharge valve 20 has the gas inlet 28 in a bottom portion of the gas discharge valve 20. The gas inlet 28 opens at a lower end and has two vent ports 29 which open to sides of the gas inlet 28. The two vent ports 29 are disposed opposite each other. A part of the gasses accumulated in the top portion of the gas-liquid separation vessel 16 are introduced into an interior of the gas discharge valve 20 through the opening formed in a lower end of the gas discharge valve 20 and the vent ports 29. In addition, the gas inlet 28 is provided with a wall portion 30 which surrounds the vent ports 29 from an outside of the vent ports 29. Since the wall portion 30 surrounds the vent ports 29 from the outside of the vent ports 29 in the gas inlet 28, the vent ports 29 are covered from a front side of the vent ports 29 by the wall portion 30. As illustrated in Fig. 9, the wall portion 30 has a cylindrical shape.

An interior of the gas discharge valve 20 is hollow and a float chamber 31 provided with the float 27 in an interior of the float chamber 31 is formed in a part of the interior of the gas discharge valve 20. The gas discharge valve 20 discharges a part of the undissolved gases introduced into the float chamber 31 from the opening of the lower end of the gas inlet 28 to the outside of the dissolution tank 4 through the vent port 29.

In the gas inlet 28, when the liquid flows over the second partitioning wall 13, even in a case where the liquid flows horizontally or flows along the outer surface of the intermediate vessel 15 in the gas-liquid separation vessel 16 in the horizontal direction, a flow flowing into the interior of the gas inlet 28 is suppressed by the wall portion 30. Since a flow direction of the liquid is changed by the wall portion 30 to go down to a lower side of the wall portion 30, it is suppressed that the opening in the lower end of the gas inlet 28 is clogged by the liquid. As a result, a part of the gases accumulated in the top portion of the gas-liquid separation vessel 16 can flow into the interior of the gas inlet 28 through the opening. Apart of the gases accumulated in the top portion of the gas-liquid separation vessel 16 is smoothly exhausted to the outside of the dissolution tank 4 by the gas inlet 28 and the gas discharge valve 20.

In addition, since the wall portion 30 is provided to surround the vent ports 29 from the outside of the vent ports 29, the gases can be collected in the interior of the gas inlet 28. The gasses collected in the interior of the gas inlet 28 enter the float chamber 31 through the vent ports 29 and are exhausted to the outside of the dissolution tank 4. Accordingly, it is realized that a part of the gases accumulated in the top portion of the gas-liquid separation vessel 16 are more smoothly and stably exhausted.

Further, since the vent ports 29 open to the side of the gas inlet 28, even if the surface of the liquid flowing in the gas-liquid separation vessel 16 is raised, it can be suppressed that the liquid flows into the interior of the gas inlet 28 through the vent ports 29. A part of the undissolved gases accumulated in the top portion of the gas-liquid separation vessel 16 can enter the float chamber 31 of the gas discharge valve 20 through the vent ports 29 without hindering the liquid flow in the gas-liquid separation vessel 16. The undissolved gases are much more smoothly exhausted.

The invention is not limited to the embodiment above-mentioned. The details of the structures of the pump and the stand, the structures of the first partitioning wall and the second partitioning wall, and the structure of the gas discharge valve may be varied.

### Numerals List

- 1:: Gas-dissolving device
- 4:: Dissolution tank
- 8:: Outlet
- 12:: First partitioning wall
- 13:: Second partitioning wall
- 14:: Gas-liquid mixing vessel
- 15:: Intermediate vessel
- 16:: Gas-liquid separation vessel
- 20:: Gas discharge valve
- 28:: Gas inlet
- 29:: Vent port
- 30:: Wall portion

### Industrial Applicability

The gas-dissolving device of the invention is one which dissolves a gas such as air in a solvent such as water. The gas-dissolving device of the invention can smoothly exhaust a part of undissolved gasses retained in a top portion and near the top portion of a dissolution tank to an outside of the dissolution tank by a gas discharge valve.

## Claims

1. A gas-dissolving device comprising:
a dissolution tank provided with an outlet capable of flowing a liquid in which gasses are dissolved; and
a first partitioning wall and a second partitioning wall provided in an interior of the dissolution tank,
wherein the interior of the dissolution tank is partitioned in turn into a gas-liquid mixing vessel, an intermediate vessel, and a gas-liquid separation vessel from an upstream side to a downstream side with respect to a flow of the liquid by the first partitioning wall and the second partitioning wall,
wherein a fluid flowing into the dissolution tank is mixed with gasses in the gas-liquid mixing vessel to produce the liquid in which the gasses are dissolved, and
wherein the liquid sequentially flows into the intermediate vessel and the gas-liquid separation vessel, and flows from the outlet of the dissolution tank to an outside of the dissolution tank,
**characterized in that**:
the gas-dissolving device further comprising:
a gas discharge valve which has a gas inlet in a bottom portion and is provided in the top portion of the gas-liquid separation vessel;
vent ports which are formed at the gas inlet and introduces a part of the gasses accumulated in the top portion of the gas-liquid separation vessel into an interior of the gas discharge valve; and
a wall portion which is formed at an outside of the vent ports and suppresses a flow of the liquid into an interior of the gas inlet.

2. The gas-dissolving device according to claim 1, wherein the wall portion is provided to surround the vent ports from an outside of the vent ports.

3. The gas-dissolving device according to claim 1 or 2, wherein the vent ports are formed to introduce the gasses into the gas inlet from a side of the gas inlet.

4. The gas-dissolving device according to any one of claims 1 to 3, wherein the second partitioning wall and the outlet are provided such that the liquid flows in a horizontal direction in the gas-liquid separation vessel.
